# EUROPÄISCHE PATENTSCHRIFT

(11) **EP 4 173 932 B1**
(45) Veröffentlichungstag und Bekanntmachung des Hinweises auf die Patenterteilung: **10.12.2025**
(21) Anmeldenummer: 22202713.8
(22) Anmeldetag: 20.10.2022
(51) Int. Cl.: B62D 33/04

(54) **FAHRZEUGAUFBAU, INSBESONDERE KOFFERAUFLIEGER ODER -ANHÄNGER, BEISPIELSWEISE KÜHLGUTAUFLIEGER ODER -ANHÄNGER, MIT EINEM SOLCHEN FAHRZEUGAUFBAU AUSGESTATTETES FAHRZEUG SOWIE VERFAHREN ZUM HERSTELLEN EINES SOLCHEN FAHRZEUGAUFBAUS**
VEHICLE BODY, ESPECIALLY A TRAILER, E.G. A TRAILER, PROVIDED WITH SUCH A VEHICLE BODY AND METHOD OF MANUFACTURING SUCH A VEHICLE BODY
CARROSSERIE DE VÉHICULE, NOTAMMENT SEMI-REMORQUE OU REMORQUE DE FOURGON, TEL QUE SEMI-REMORQUE OU REMORQUE DE MARCHANDISES RÉFRIGÉRÉE, VÉHICULE ÉQUIPÉ D'UNE TELLE CARROSSERIE DE VÉHICULE ET PROCÉDÉ DE FABRICATION D'UNE TELLE CARROSSERIE DE VÉHICULE

(30) Priorität: 29.10.2021 DE 102021128322
(43) Veröffentlichungstag der Anmeldung: 03.05.2023
(73) Patentinhaber: Kögel Trailer GmbH, 89349 Burtenbach (DE)
(72) Erfinder: BIRLE, Günter, 86877 Walkertshofen (DE)
(74) Vertreter: Meissner Bolte Partnerschaft mbB

(56) Entgegenhaltungen:
- EP-A1- 2 594 464
- WO-A1-2011/029451
- WO-A1-2015/179138
- GB-A- 2 336 137

## Beschreibung

Die Erfindung betrifft einen Fahrzeugaufbau gemäß dem Oberbegriff von Patentanspruch 1 sowie ein mit einem solchen Fahrzeugaufbau ausgestattetes Fahrzeug und ein Verfahren zum Herstellen eines derartigen Fahrzeugaufbaus.

Fahrzeugaufbauten, wie beispielsweise Kofferauflieger oder Kofferanhänger sowie insbesondere Kühlgutauflieger und Kühlgutanhänger, sind seit langem bekannt und im Transportwesen unerlässlich, um Waren zu transportieren und unter Umständen während des Transports zu temperieren, insbesondere zu kühlen.

Insbesondere Kühleraufbauten umfassen zu diesem Zweck einen Kühlraum mit einer Vorderwand, an welcher in aller Regel ein Kühlaggregat angebracht ist. An die Vorderwand schließen sich jeweilige sich in rückwärtiger Richtung erstreckende Seitenwände an. Die Rückwand des Kühlraums umfasst in aller Regel eine Klappe oder aufschwenkbare Türen, die der Be- und Entladung des Kühlgutaufliegers oder Kühlgutanhängers dienen.

Aufgrund des Wunsches einen Lastkraftwagen, bestehend aus Zugfahrzeug und Auflieger, insbesondere Sattelauflieger, oder Anhänger, der eine verordnete maximale Länge nicht überschreitet, mit einem maximal großen Laderaum auszustatten, wird ein jeweiliger Abstand zwischen Zugfahrzeug und Auflieger oder Anhänger so klein wie möglich gestaltet, um im Straßenverkehr und insbesondere in Kurven noch manövrierbar zu sein. Aus diesem Grund weisen Auflieger, sowie gegebenenfalls auch Anhänger, im Bereich der jeweiligen Verbindungen von Vorderwand und Seitenwand Abschrägungen der Aufbaukante auf, um einen Durchschwenkradius zu gewährleisten, der notwendig ist, wenn der Auflieger oder der Anhänger beim Kurvenfahren gegenüber dem Zugfahrzeug abknickt.

Diese Abschrägung der Aufbaukante zur Gewährleistung des Durchschwenkradius bedingt allerdings in nachteiliger Weise, dass eine Dicke einer Wandung des Fahrzeugaufbaus in diesem Bereich, d. h. im Verbindungsbereich von Vorderwand und Seitenwand, geringer ist als an der Vorderwand und der Seitenwand selbst, was insbesondere bei Fahrzeugen, mit welchen Waren während des Transports temperiert oder insbesondere gekühlt werden sollen, problematisch und äußerst nachteilig ist, da diese Abschrägung der Aufbaukante zu einer geringeren Isolierwirkung und damit zu einer Wärme-/Kältebrücke an dem Fahrzeugaufbau führt. Da bei aus dem Stand der Technik bekannten Fahrzeugen im Zuge der Montage von Vorderwand und Seitenwand zudem üblicherweise Holzprofile als Verbindungsflächen eingesetzt werden, um die Vorderwand und die Seitenwand im Zuge des Zusammenbaus relativ zueinander zu fixieren, verschärft sich das Wärme-/Kältebrücken-Problem, das an der Aufbaukante des Fahrzeugaufbaus aufgrund der dortigen Abschrägung ohnehin vorhanden ist, noch zusätzlich. Ein Beispiel ist bekannt durch die GB 2 336 137 A.

Der Erfindung liegt die Aufgabe zugrunde, die vorgenannten Probleme zu vermeiden und einen Fahrzeugaufbau zur Verfügung zu stellen, der im Bereich der aufgrund des Durchschwenkradius notwendigen Aufbaukante eine gegenüber aus dem Stand der Technik bekannten Fahrzeugaufbauten optimierte Isolierung aufweist, sowie ferner ein Verfahren zum Herstellen eines solchen Fahrzeugaufbaus und ein mit einem solchen Fahrzeugaufbau ausgestattetes Fahrzeug zur Verfügung zu stellen.

Diese Aufgabe wird durch einen Fahrzeugaufbau gemäß Patentanspruch 1 sowie ferner durch ein Fahrzeug gemäß Patentanspruch 11 und ein Verfahren zum Herstellen eines solchen Fahrzeugaufbaus gemäß Patentanspruch 12 gelöst.

Die Aufgabe wird gelöst, durch einen Fahrzeugaufbau, insbesondere Kofferauflieger oder -anhänger, beispielsweise Kühlgutauflieger oder -anhänger, mit einer in Vorwärtsfahrrichtung angeordneten Vorderwand, wenigstens einer sich von der Vorderwand in rückwärtiger Richtung erstreckenden Seitenwand und wenigstens einem sich von der Vorderwand in rückwärtiger Richtung, insbesondere in Richtung eines Laderaums, erstreckenden Abstandhalter, wobei wenigstens ein ein Innenwinkelvolumen zwischen Vorderwand und Seitenwand definierendes Verbindungselement vorgesehen ist, das einen ersten Verbindungsabschnitt, einen zweiten Verbindungsabschnitt und einen den ersten Verbindungsabschnitt und den zweiten Verbindungsabschnitt verbindenden Brückenabschnitt aufweist, wobei im Bereich des Innenwinkelvolumens ein Dämmmaterial angeordnet ist, wobei der erste Verbindungsabschnitt an der Vorderwand und der zweite Verbindungsabschnitt an der Seitenwand befestigt ist, wobei in Richtung des Laderaums in einem Eckbereich die Vorderwand mit der Seitenwand verbunden ist, wobei die Vorderwand und die Seitenwand aneinandergrenzen.

Ein wesentlicher Punkt der Erfindung liegt darin, dass durch den Einsatz eines Verbindungselements, das mittels eines jeweiligen Verbindungsabschnitts einerseits an der Vorderwand und andererseits an der Seitenwand befestigt ist, ein Innenwinkelvolumen definiert wird, das ein Volumen bildet, das zur Vorderseite des Fahrzeugaufbaus durch die Vorderwand, zur Seite des Fahrzeugaufbaus durch die Seitenwand und in Richtung eines Laderaums des Fahrzeugaufbaus durch den Brückenabschnitt begrenzt ist. Das Innenwinkelvolumen bildet somit einen Raum, der zur Aufnahme von Dämmmaterial geeignet ist, mit welchem die Isolierwirkung der Vorderwand und der Seitenwand erfindungsgemäß ergänzt und verbessert ist.

Dieses Dämmmaterial kann in Form von Luft vorliegen, die in dem Innenwinkelvolumen eingeschlossen ist, wobei der Raum zwischen Vorderwand, Seitenwand und Brückenabschnitt in diesem Fall vorzugsweise allseitig geschlossen ist und gemäß einer Ausführungsform der Erfindung Raumunterteilungen, beispielsweise in Form von Lamellen oder einem anderen Material, das freie Konvektion behindert, aufweisen kann.

Gemäß einer alternativen Ausführungsform der Erfindung kann das Dämmmaterial auch in Form einer Schaumeinlage vorliegen. Die Schaumeinlage kann erfindungsgemäß dadurch erzeugt sein, dass der Raum zwischen Vorderwand, Seitenwand und Brückenabschnitt des Verbindungselements während des Einbaus oder nach dem Einbau des Verbindungselements, respektive während des Zusammenbaus oder nach einem Zusammenbau von Vorderwand, Seitenwand und Verbindungselement, mit einem Isolierschaum ausgeschäumt wird. In diesem Fall ist das Volumen des Innenwinkels vorzugsweise allseitig geschlossen, so dass der Isolierschaum, insbesondere während des Ausschäumens, nicht aus diesem Volumen, das auch als Isoliervolumen bezeichnet werden kann, austreten kann. Zu diesem Zweck kann das Volumen sowohl kopf- als auch bodenseitig mit beispielsweise einer Klappe oder einem Deckel verschlossen sein.

Gemäß einer weiteren Ausführungsform der Erfindung kann das Dämmmaterial auch in Form von vorgeformten Dämmelementen vorliegen, die beispielsweise aus Schaumstoff gefertigt sind und/oder Schaumstoff aufweisen. Diese vorgeformten Dämmelemente können sodann vor oder im Zuge des Zusammenbaus von Vorderwand, Seitenwand und Verbindungselement in dem Raum des Innenwinkelvolumens angeordnet und dort befestigt oder fixiert sein. Alternativ ist es erfindungsgemäß auch möglich, derartige vorgeformte Dämmelemente nach einem Zusammenbau von Vorderwand, Seitenwand und Verbindungselement in den dadurch gebildeten Profilraum einzufüllen, einzusetzen und/oder einzuschieben. Auch in diesem Fall kann das Isoliervolumen kopf- und/oder bodenseitig vollständig oder teilweise geschlossen sein, so dass das oder die mehreren Dämmelemente nicht aus dem Isoliervolumen herausfallen können.

Im Falle eines Einsatzes von vorgefertigten und vorzugsweise einstückig ausgebildeten Dämmelementen ist es erfindungsgemäß nicht notwendig, dass das Isoliervolumen vollständig geschlossen ist; vielmehr ist es in diesem Fall erfindungsgemäß ausreichend, wenn das oder die mehreren verwendete(n) Dämmelement(e) durch ein oder mehrere Verbindungselement(e) in diesem Isoliervolumen, d. h. im Bereich des Innenwinkelvolumens, gehalten wird/werden.

Es sei ferner darauf hingewiesen, dass es im Falle einer Verwendung von einer oder mehreren Schaumeinlage(n) als Dämmmaterial, unabhängig davon, ob das Dämmmaterial eingeschäumt oder in Form von vorgefertigten Dämmelementen eingesetzt wird, erfindungsgemäß vorgesehen und vorteilhaft ist, das Dämmmaterial möglichst passgenau in das Innenwinkelvolumen einzusetzen bzw. einzufüllen, damit eine erfindungsgemäß möglichst gleichmäßige Isolierwirkung des Dämmmaterials erhalten wird.

In erfindungsgemäß vorteilhafter Weise ist es, trotz einer zur Gewährleistung eines Durchschwenkradius notwendigen Abschrägung der Aufbaukante, mittels des Einsatzes eines erfindungsgemäßen Verbindungselements sowie eines im Bereich des Innenwinkelvolumens angeordneten Dämmmaterials gemäß vorstehenden Ausführungen möglich, eine gegenüber dem Stand der Technik optimierte Isolierung des Laderaums, insbesondere im Eckenbereich zwischen Vorderwand und Seitenwand, zu gewährleisten.

Da, insbesondere bei einem Kühlgutauflieger oder -anhänger, im Bereich der Anbindung von Vorderwand und Seitenwand aufgrund der Notwendigkeit von an der Vorderwand befindlichen Luftrückführungsdistanzelementen ohnehin ein Totraum vorhanden ist, kann dieser Raum für die erfindungsgemäße zusätzliche Eckenisolation genutzt werden, um die mit der aufgrund des Durchschwenkradius zwingend notwendigen äußeren Abschrägung der Aufbaukante einhergehende mangelhafte Eckenisolation von herkömmlichen Fahrzeugaufbauten gegenüber dem Stand der Technik deutlich zu verbessern.

Gemäß einer bevorzugten Ausführungsform der Erfindung erstreckt sich das Verbindungselement und/oder das Dämmmaterial zumindest über einen Teil einer Ladeinnenraumhöhe, vorzugsweise über die gesamte Ladeinnenraumhöhe.

Gemäß dieser Ausführungsform ist es erfindungsgemäß möglich, eine Isolierung des Ladeinnenraums, insbesondere höhenmäßig, an jeweils gewünschte Erfordernisse anzupassen. Insbesondere beim Einsatz von vorgeformten Dämmelementen ist gemäß dieser Ausführungsform auch ein materialsparender Einsatz eines oder mehrerer Verbindungselemente möglich, da die jeweiligen Verbindungselemente in diesem Fall nur notwendig sind, um die vorgeformten Dämmelemente nach ihrem Einsatz an Ort und Stelle zu halten.

Gemäß einer weiteren Ausführungsform der Erfindung ist der erste Verbindungsabschnitt als erste Verbindungsleiste ausgebildet, die sich entlang der Vorderwand in Richtung eines Eckraums, respektive Isolierraums, und/oder in Richtung Abstandhalter erstreckt.

In analoger Weise kann der zweite Verbindungsabschnitt als zweite Verbindungsleiste ausgebildet sein, die sich entlang der Seitenwand in Richtung des auch als Isolierraum bezeichneten Eckraums und/oder in rückwärtiger Richtung erstreckt.

Eine Ausbildung des ersten und/oder zweiten Verbindungsabschnitts als Verbindungsleiste bietet erfindungsgemäß den Vorteil, dass die jeweiligen ersten und zweiten Verbindungsabschnitte eine verbreiterte Kontaktzone zur Anbringung an der jeweiligen Vorderwand oder Seitenwand aufweisen. Diese verbreiterte Kontaktzone kann sich, ausgehend von einem Ansatz des Brückenabschnitts, sowohl in Richtung eines Eckraums, d. h. in Richtung des Isolierraums, bzw. in Richtung eines Zusammentreffens von Vorderwand und Seitenwand, als auch im Falle der Vorderwand in Richtung Abstandhalter bzw. im Falle der Seitenwand in rückwärtiger Richtung erstrecken. Die jeweilige erste und zweite Verbindungsleiste dient erfindungsgemäß einer Befestigung des Verbindungselements an und/oder mit der Vorderwand sowie Seitenwand. Eine derartige Befestigung kann beispielsweise per Schweißung, mittels Nieten oder Schrauben und/oder durch Kleben erfolgen. Ein erfindungsgemäßes Verbindungselement dient somit auch einer Verbindung, beispielsweise Verklebung, von Seitenwand und Vorderwand, wodurch zum einen ein Zusammenbau von Vorderwand und Seitenwand vereinfacht und deren jeweilige Verbindung strukturell stabilisiert wird.

Gemäß einer weiteren Ausführungsform der Erfindung können sich die erste und zweite Verbindungsleiste so weit in Richtung Eckraum erstrecken, dass die Verbindungsleisten miteinander in Kontakt kommen und gemäß einer weiteren Ausführungsform der Erfindung auch miteinander verbunden sind. Auf diese Weise kann das Verbindungselement erfindungsgemäß strukturell verstärkt werden. In diesem Fall bildet das Verbindungselement beispielsweise ein im Querschnitt dreieckförmiges Profil, von welchem sich, je nach Wunsch, seitlich die jeweiligen Verbindungsleisten in Richtung Abstandhalter einerseits sowie in rückwärtiger Richtung andererseits erstrecken.

Das im Querschnitt beispielsweise dreieckförmige Profil des Verbindungselements kann mit Dämmmaterial gefüllt sein. Es sei an dieser Stelle erwähnt, dass die Verbindungsleisten des Verbindungselements gemäß einer bevorzugten Ausführungsform der Erfindung in vorteilhafter Weise im Wesentlichen parallel zu der jeweils zugeordneten Vorderwand oder Seitenwand verlaufen. Eine derartige Ausführungsform ist insbesondere dann von Vorteil, wenn das Verbindungselement auch zur Montage von Vorderwand und Seitenwand verwendet wird, da dann die Kontaktfläche der jeweiligen Verbindungsleisten mit der Vorderwand und der Seitenwand einen maximalen Spielraum zur Verbindung der jeweiligen Vorderwand sowie Seitenwand mit dem Verbindungselement bietet.

Gemäß einer weiteren Ausführungsform der Erfindung kann das Verbindungselement als Winkelprofil, insbesondere als im Querschnitt im Wesentlichen wannenförmiges Winkelprofil, ausgebildet sein, wobei der Boden der Wanne in diesem Fall den Brückenabschnitt und die jeweiligen Seitenwände der Wanne die jeweiligen Verbindungsabschnitte, insbesondere Verbindungsleisten, bilden.

An dieser Stelle sei ferner erwähnt, dass es erfindungsgemäß auch möglich ist, dass sich die jeweilige erste und/oder zweite Verbindungsleiste, beispielsweise aus Platzgründen, ausschließlich in Richtung Eckraum oder im Falle der ersten Verbindungsleiste ausschließlich in Richtung Abstandhalter, d. h. quer zur Vorwärtsrichtung des Fahrzeugaufbaus, oder im Falle der zweiten Verbindungsleiste ausschließlich in rückwärtiger Richtung erstreckt.

Wie vorerwähnt, ist das Dämmmaterial in einem von dem Brückenabschnitt, der Vorderwand und der Seitenwand definierten Eckraum und/oder in einem durch den Brückenabschnitt, die erste Verbindungsleiste und die zweite Verbindungsleiste definierten Profilraum angeordnet.

Des Weiteren ist der Brückenabschnitt erfindungsgemäß als konkave oder konvexe Fläche oder als ebene Fläche ausgebildet, so dass der Brückenabschnitt entweder eine Wölbung nach außen in Richtung Laderaum oder eine Wölbung nach innen in Richtung Eckraum aufweist. Sowohl eine konkave als auch eine konvexe Ausbildung des Brückenabschnitts können die strukturelle Stabilität des Brückenabschnitts verbessern. In diesem Zusammenhang wird darauf hingewiesen, dass die Begriffe "konkav" und "konvex" im Rahmen dieser Erfindung auch eckig und gegebenenfalls mehreckig gestaltete Ein- und Ausbuchtungen umfassen können. Des Weiteren ist es möglich, dass der Brückenabschnitt Befestigungselemente, wie beispielsweise Haken oder Laschen, aufweist, die als Halterungen dienen können.

Gemäß einer weiteren Ausführungsform der Erfindung können an einer Kontaktstelle zwischen Vorderwand und Seitenwand auch mehrere Verbindungselemente angeordnet sein, die unmittelbar aneinander angrenzen oder gemäß einer alternativen Ausführungsform der Erfindung zueinander höhenmäßig beabstandet sein können. Auf diese Weise lässt sich die erfindungsgemäß optimierte Isolierung des Eckbereichs eines Fahrzeugaufbaus, in welchem dessen Vorderwand und Seitenwand aneinandergrenzen, segmentartig und damit flexibel gestalten.

In vorteilhafter Weise ist/sind das eine oder die mehreren Verbindungselement(e) erfindungsgemäß somit als Dämm-, Halte- und/oder Verstärkungselement ausgebildet.

Des Weiteren wird die erfindungsgemäße Aufgabe, wie vorerwähnt, auch durch ein Fahrzeug mit einem Fahrzeugaufbau gemäß vorstehenden Ausführungen gelöst, wobei ein derartiges Fahrzeug aufgrund seiner verbesserten Isolierung über gegenüber dem Stand der Technik optimierte Eigenschaften hinsichtlich Klimatisierung und/oder Temperierung während eines Transports von Waren verfügt.

Ferner wird die erfindungsgemäße Aufgabe auch durch ein Verfahren zum Herstellen eines Fahrzeugaufbaus mit einer in Vorwärtsfahrrichtung angeordneten Vorderwand, wenigstens einer sich von der Vorderwand in rückwärtiger Richtung erstreckenden Seitenwand und wenigstens einem sich von der Vorderwand in rückwärtiger Richtung, insbesondere in Richtung eines Laderaums, erstreckenden Abstandhalter unter Verwendung eines Verbindungselements gelöst, das einen ersten Verbindungsabschnitt, einen zweiten Verbindungsabschnitt und einen den ersten Verbindungsabschnitt und den zweiten Verbindungsabschnitt verbindenden Brückenabschnitt aufweist, wobei in Richtung des Laderaums in einem Eckbereich die Vorderwand mit der Seitenwand verbunden wird, wobei die Vorderwand und die Seitenwand aneinandergrenzen, und der erste Verbindungsabschnitt mit der den Fahrzeugaufbau bildenden Vorderwand und der zweite Verbindungsabschnitt mit der den Fahrzeugaufbau bildenden Seitenwand verbunden wird.

In vorteilhafter Weise kann das Verbindungselement zur Montage von Vorderwand und Seitenwand eines Fahrzeugaufbaus genutzt werden, indem eine jeweilige Wand des Fahrzeugaufbaus zu deren jeweiliger Fixierung mit dem Verbindungselement, respektive mit den Verbindungsabschnitten, insbesondere Verbindungsleisten des Verbindungselements, verbunden wird. Zur optimierten Montage können in den Verbindungsleisten beispielsweise Langlöcher vorgesehen sein, um eine Justiermöglichkeit von Vorderwand und Seitenwand zueinander sowie zum Verbindungselement zur Verfügung zu stellen.

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine perspektivische Schnittansicht eines Fahrzeugaufbaus gemäß einem Ausführungsbeispiel der Erfindung;
- Fig. 2: eine perspektivische Ansicht von oben eines Fahrzeugaufbaus gemäß einem Ausführungsbeispiel der Erfindung;
- Fig. 3: eine perspektivische Ansicht von oben eines Fahrzeugaufbaus gemäß einem weiteren Ausführungsbeispiel der Erfindung; und
- Fig. 4: eine vergrößerte perspektivische Ansicht des Fahrzeugaufbaus gemäß Fig. 2.

In der nachfolgenden Beschreibung werden für gleiche und gleichwirkende Teile dieselben Bezugsziffern verwendet.

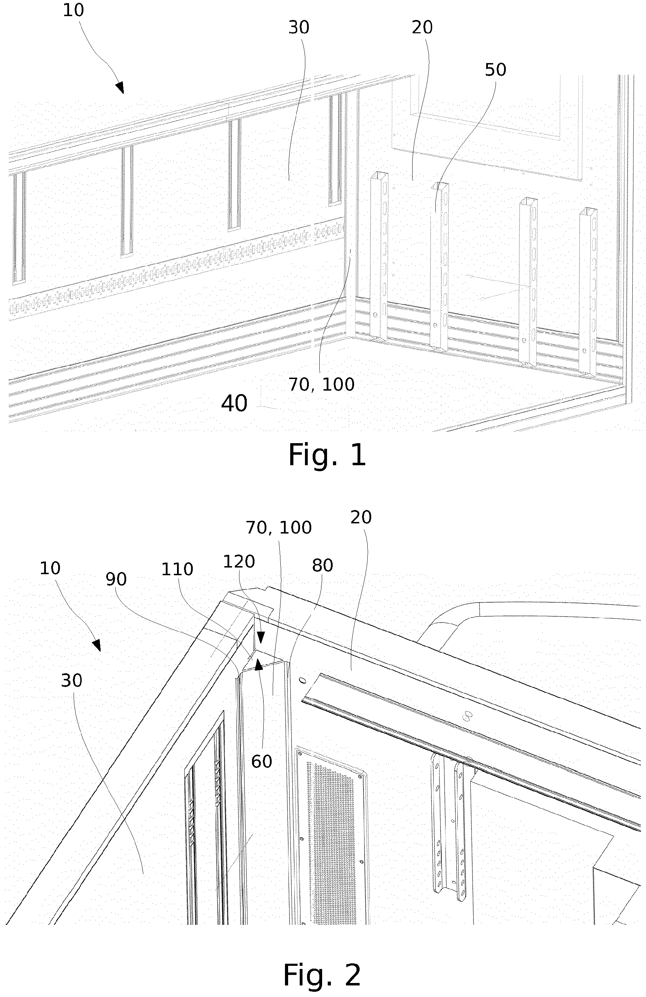

Fig. 1 zeigt eine perspektivische Schnittansicht eines Fahrzeugaufbaus 10 gemäß einem Ausführungsbeispiel der Erfindung. Der Fahrzeugaufbau 10 umfasst eine Vorderwand 20 sowie eine Seitenwand 30 sowie ferner Abstandshalter 50. Die Vorderwand 20 sowie jeweilige Seitenwände 30 bilden zusammen mit einer als Klappe oder Tür ausgebildeten Rückwand (nicht gezeigt) den Laderaum 40. In Richtung des Laderaums 40 ist in einem Eckbereich, in welchem die Vorderwand 20 mit der Seitenwand 30 verbunden ist, ein Verbindungselement 70 mit einem in Richtung Laderaum 40 weisenden Brückenabschnitt 100 angeordnet.

Fig. 2 zeigt eine perspektivische Ansicht von oben des Fahrzeugaufbaus 10 gemäß einem Ausführungsbeispiel der Erfindung, beispielsweise gemäß Fig. 1.

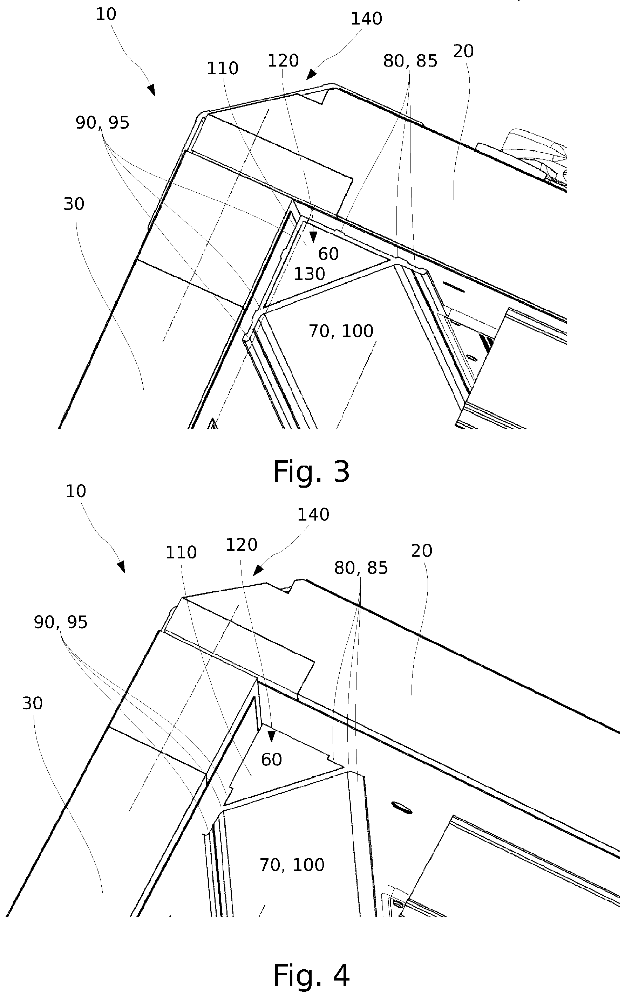

Fig. 4 zeigt eine diesbezügliche vergrößerte Detaildarstellung des Fahrzeugaufbaus 10 gemäß Fig. 2. Wie insbesondere aus Fig. 4 zu erkennen ist, umfasst der Fahrzeugaufbau 10 eine Vorderwand 20 sowie eine Seitenwand 30, die über ein Verbindungselement 70 miteinander verbunden sind. Das Verbindungselement 70 umfasst seinerseits einen ersten Verbindungsabschnitt 80, der als erste Verbindungsleiste 85 ausgebildet ist, sowie einen zweiten Verbindungsabschnitt 90, der als zweite Verbindungsleiste 95 ausgebildet ist. Beide Verbindungsabschnitte 80 und 90 des Verbindungselements 70 sind über einen Brückenabschnitt 100 miteinander verbunden. Die beiden Verbindungsleisten 85 und 95 wiederum erstrecken sich sowohl in Richtung eines Eckraums 120 als auch im Fall der ersten Verbindungsleiste 85 parallel zur Vorderwand 20 in Richtung Abstandhalter 50 sowie ferner im Fall der zweiten Verbindungsleiste 95 in rückwärtiger Richtung. Der Brückenabschnitt 100 begrenzt das Innenwinkelvolumen 60, das durch einen Vorderwandabschnitt, einen Seitenwandabschnitt und den Brückenabschnitt 100 des Verbindungselements 70 gebildet wird. In diesem Volumen, d.h. im Bereich des Innenwinkelvolumens, ist ein Dämmmaterial 110 angeordnet, das eine optimierte Isolierung des Eckbereichs, in welchem Vorderwand 20 und Seitenwand 30 aneinandergrenzen, gewährleistet. Auf diese Weise ist es erfindungsgemäß möglich, eine gemäß dem Stand der Technik aufgrund einer Abschrägung 140 der Aufbaukante zur Gewährleistung eines Durchschwenkradius mangelhafte Isolierung in diesem Eckbereich, in welchem Vorderwand 20 und Seitenwand 30 aneinandergrenzen, deutlich zu verbessern.

Fig. 3 zeigt eine perspektivische Ansicht von oben eines Fahrzeugaufbaus 10 gemäß einem weiteren Ausführungsbeispiel der Erfindung.

Das in Fig. 3 gezeigte erfindungsgemäße Ausführungsbeispiel unterscheidet sich von dem in Fig. 2 gezeigten Ausführungsbeispiel dahingehend, dass die erste Verbindungsleiste 85 und die zweite Verbindungsleiste 95 in Richtung Eckraum 120 so weit verlängert sind, dass die erste Verbindungsleiste 85 und die zweite Verbindungsleiste 95 aneinandergrenzen und miteinander verbunden sind und auf diese Weise zusammen mit dem Brückenabschnitt 100 ein Dreiecksprofil bilden. Im Falle des in Fig. 3 gezeigten Ausführungsbeispiels ist das Dämmmaterial 110 in dem durch die erste Verbindungsleiste 85, die zweite Verbindungsleiste 95 und den Brückenabschnitt 100 definierten Profilraum 130 angeordnet. Die jeweiligen Verbindungsabschnitte 80 und 90, respektive Verbindungsleisten 85 und 95, sind mit der jeweils zugeordneten Vorderwand 20 und Seitenwand 30 fest verbunden und können zur Montage von Vorderwand 20, Seitenwand 30 und Verbindungselement 70 verwendet werden.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Fahrzeugaufbau
- 20: Vorderwand
- 30: Seitenwand
- 40: Laderaum
- 50: Abstandhalter
- 60: Innenwinkelvolumen
- 70: Verbindungselement
- 80: erster Verbindungsabschnitt
- 85: erste Verbindungsleiste
- 90: zweiter Verbindungsabschnitt
- 95: zweite Verbindungsleiste
- 100: Brückenabschnitt
- 110: Dämmmaterial
- 120: Eckraum
- 130: Profilraum
- 140: Abschrägung

## Patentansprüche

1. Fahrzeugaufbau (10), insbesondere Kofferauflieger oder -anhänger, beispielsweise Kühlgutauflieger oder -anhänger, mit einer in Vorwärtsfahrrichtung angeordneten Vorderwand (20), wenigstens einer sich von der Vorderwand (20) in rückwärtiger Richtung erstreckenden Seitenwand (30) und wenigstens einem sich von der Vorderwand (20) in rückwärtiger Richtung, insbesondere in Richtung eines Laderaums (40), erstreckenden Abstandhalter (50), wobei
wenigstens ein ein Innenwinkelvolumen (60) zwischen Vorderwand (20) und Seitenwand (30) definierendes Verbindungselement (70) vorgesehen ist, das einen ersten Verbindungsabschnitt (80), einen zweiten Verbindungsabschnitt (90) und einen den ersten Verbindungsabschnitt (80) und den zweiten Verbindungsabschnitt (90) verbindenden Brückenabschnitt (100) aufweist, wobei im Bereich des Innenwinkelvolumens (60) ein Dämmmaterial (110) angeordnet ist,
**dadurch gekennzeichnet , dass**
der erste Verbindungsabschnitt (80) an der Vorderwand (20) und der zweite Verbindungsabschnitt (90) an der Seitenwand (30) befestigt ist, wobei in Richtung des Laderaums (40) in einem Eckbereich die Vorderwand (20) mit der Seitenwand (30) verbunden ist, wobei die Vorderwand (20) und die Seitenwand (30) aneinandergrenzen.

2. Fahrzeugaufbau nach Anspruch 1,
**dadurch gekennzeichnet , dass**
sich das Verbindungselement (70) und/oder das Dämmmaterial (110) zumindest über einen Teil einer Ladeinnenraumhöhe, vorzugsweise über die gesamte Ladeinnenraumhöhe, erstreckt.

3. Fahrzeugaufbau nach einem der vorhergehenden Ansprüche,
**dadurch gekennzeichnet , dass**
der erste Verbindungsabschnitt (80) als erste Verbindungsleiste (85) ausgebildet ist, die sich entlang der Vorderwand (20) in Richtung eines Eckraums (120) und/oder in Richtung Abstandhalter (50) erstreckt.

4. Fahrzeugaufbau nach einem der vorhergehenden Ansprüche,
**dadurch gekennzeichnet , dass**
der zweite Verbindungsabschnitt (90) als zweite Verbindungsleiste (95) ausgebildet ist, die sich entlang der Seitenwand (30) in Richtung des Eckraums (120) und/oder in rückwärtiger Richtung erstreckt.

5. Fahrzeugaufbau nach einem der vorhergehenden Ansprüche 3 und 4,
**dadurch gekennzeichnet , dass**
die erste (85) und die zweite Verbindungsleiste (95) miteinander verbunden sind.

6. Fahrzeugaufbau nach einem der vorhergehenden Ansprüche,
**dadurch gekennzeichnet , dass**
das Verbindungselement (70) als Winkelprofil ausgebildet ist.

7. Fahrzeugaufbau nach einem der vorhergehenden Ansprüche und/oder nach Anspruch 3 und 4,
**dadurch gekennzeichnet, dass**
das Dämmmaterial (110) in einem von dem Brückenabschnitt (100), der Vorderwand (20) und der Seitenwand (30) definierten Eckraum (120), und/oder in einem durch den Brückenabschnitt (100), die erste Verbindungsleiste (85) und die zweite Verbindungsleiste (95) definierten Profilraum (130) angeordnet ist.

8. Fahrzeugaufbau nach einem der vorhergehenden Ansprüche,
**dadurch gekennzeichnet , dass**
der Brückenabschnitt (100) als konkave oder konvexe Fläche oder als ebene Fläche ausgebildet ist.

9. Fahrzeugaufbau nach einem der vorhergehenden Ansprüche,
**dadurch gekennzeichnet , dass**
mehrere Verbindungselemente (70) zueinander höhenmäßig beabstandet angeordnet sind.

10. Fahrzeugaufbau nach einem der vorhergehenden Ansprüche,
**dadurch gekennzeichnet , dass**
das oder die mehreren Verbindungselement(e) (70) als Dämm-, Halte- und/oder Verstärkungselement(e) ausgebildet sind.

11. Fahrzeug mit einem Fahrzeugaufbau (10) nach einem der vorhergehenden Ansprüche.

12. Verfahren zum Herstellen eines Fahrzeugaufbaus (10) mit einer in Vorwärtsfahrrichtung angeordneten Vorderwand (20), wenigstens einer sich von der Vorderwand (20) in rückwärtiger Richtung erstreckenden Seitenwand (30) und wenigstens einem sich von der Vorderwand (20) in rückwärtiger Richtung, insbesondere in Richtung eines Laderaums (40), erstreckenden Abstandhalter (50) unter Verwendung eines Verbindungselements (70), das einen ersten Verbindungsabschnitt (80), einen zweiten Verbindungsabschnitt (90) und einen den ersten Verbindungsabschnitt (80) und den zweiten Verbindungsabschnitt (90) verbindenden Brückenabschnitt (100) aufweist, wobei in Richtung des Laderaums (40) in einem Eckbereich die Vorderwand (20) mit der Seitenwand (30) verbunden wird, wobei die Vorderwand (20) und die Seitenwand (30) aneinandergrenzen, und der erste Verbindungsabschnitt (80) mit der den Fahrzeugaufbau (10) bildenden Vorderwand (20) und der zweite Verbindungsabschnitt (90) mit der den Fahrzeugaufbau (10) bildenden Seitenwand (30) verbunden wird.

## Claims

1. A vehicle body (10), in particular a box semi-trailer or box trailer, for example a refrigerated semi-trailer or refrigerated trailer, having a front wall (20) arranged in the forward driving direction, at least one side wall (30) extending from the front wall (20) in the rearward direction, and at least one spacer (50) extending from the front wall (20) in the rearward direction, in particular in the direction of a load space (40), wherein
at least one connecting element (70) is provided, which defines an inner angle volume (60) between the front wall (20) and the side wall (30) and has a first connecting portion (80), a second connecting portion (90), and a bridge portion (100) that connects the first connecting portion (80) and the second connecting portion (90), wherein an insulating material (110) is arranged in the region of the inner angle volume (60),
**characterised in that**
the first connecting portion (80) is fastened to the front wall (20), and the second connecting portion (90) is fastened to the side wall (30), wherein the front wall (20) is connected to the side wall (30) in a corner region in the direction of the load space (40), wherein the front wall (20) and the side wall (30) are adjacent to one another.

2. The vehicle body according to Claim 1,
**characterised in that**
the connecting element (70) and/or the insulating material (110) extends at least over a part of an inner load space height, preferably over the entire inner load space height.

3. The vehicle body according to one of the preceding claims,
**characterised in that**
the first connecting portion (80) is designed as a first connecting strip (85), which extends along the front wall (20) in the direction of a corner space (120) and/or in the direction of the spacer (50).

4. The vehicle body according to one of the preceding claims,
**characterised in that**
the second connecting portion (90) is designed as a second connecting strip (95), which extends along the side wall (30) in the direction of the corner space (120) and/or in the rearward direction.

5. The vehicle body according to one of the preceding Claims 3 and 4,
**characterised in that**
the first connecting strip (85) and the second connecting strip (95) are connected to one another.

6. The vehicle body according to one of the preceding claims,
**characterised in that**
the connecting element (70) is designed as an angled profile.

7. The vehicle body according to one of the preceding claims and/or according to Claims 3 and 4,
**characterised in that**
the insulating material (110) is arranged in a corner space (120) defined by the bridge portion (100), the front wall (20) and the side wall (30) and/or in a profile space (130) defined by the bridge portion (100), the first connecting strip (85) and the second connecting strip (95).

8. The vehicle body according to one of the preceding claims,
**characterised in that**
the bridge portion (100) is designed as a concave or convex face or as a flat surface.

9. The vehicle body according to one of the preceding claims,
**characterised in that**
multiple connecting elements (70) are arranged at a distance from one another in terms of height.

10. The vehicle body according to one of the preceding claims,
**characterised in that**
the connecting element(s) (70) is/are designed as (an) insulating, retaining and/or reinforcing element(s).

11. A vehicle having a vehicle body (10) according to one of the preceding claims.

12. A method for producing a vehicle body (10) having a front wall (20) arranged in the forward driving direction, at least one side wall (30) extending from the front wall (20) in the rearward direction, and at least one spacer (50) extending from the front wall (20) in the rearward direction, in particular in the direction of a load space (40), using a connecting element (70), which has a first connecting portion (80), a second connecting portion (90), and a bridge portion (100) that connects the first connecting portion (80) and the second connecting portion (90), wherein the front wall (20) is connected to the side wall (30) in a corner region in the direction of the load space (40), wherein the front wall (20) and the side wall (30) are adjacent to one another, and the first connecting portion (80) is connected to the front wall (20) that forms the vehicle body (10), and the second connecting portion (90) is connected to the side wall (30) that forms the vehicle body (10).

## Revendications

1. Carrosserie de véhicule (10), notamment semi-remorque fourgon ou remorque à caisse, par exemple semi-remorque ou remorque pour produits réfrigérés, pourvue d'une paroi antérieure (20) placée dans la direction de déplacement vers l'avant, d'au moins une paroi latérale (30) s'étendant à partir de la paroi antérieure (20) dans la direction arrière et d'au moins un espaceur (50) s'étendant à partir de la paroi antérieure (20) dans la direction arrière, notamment dans la direction d'un espace de chargement (40),
étant prévu au moins un élément d'assemblage (70) définissant un volume angulaire intérieur (60) entre la paroi antérieure (20) et la paroi latérale (30), qui comporte un premier segment d'assemblage (80), un deuxième segment d'assemblage (90) et un segment de pontage (100) assemblant le premier segment d'assemblage (80) et le deuxième segment d'assemblage (90), dans la zone du volume angulaire intérieur (60) étant placée une matière isolante (110),
**caractérisée en ce que**
le premier segment d'assemblage (80) est fixé sur la paroi antérieure (20) et le deuxième segment d'assemblage (90) est fixé sur la paroi latérale (30), dans la direction de l'espace de chargement (40), dans la zone d'un angle, la paroi antérieure (20) étant assemblée avec la paroi latérale (30), la paroi antérieure (20) et la paroi latérale (30) étant adjacentes.

2. Carrosserie de véhicule selon la revendication 1,
**caractérisée en ce que**
l'élément d'assemblage (70) et/ou la matière isolante (110) s'étend au moins sur une partie d'une hauteur d'espace intérieur de chargement, de préférence sur l'ensemble de la hauteur d'espace intérieur de chargement.

3. Carrosserie de véhicule selon l'une quelconque des revendications précédentes,
**caractérisée en ce que**
le premier segment d'assemblage (80) est conçu sous la forme d'un premier tasseau d'assemblage (85), qui s'étend le long de la paroi antérieure (20), dans la direction d'un espace d'angle (120) et/ou dans la direction de l'espaceur (50).

4. Carrosserie de véhicule selon l'une quelconque des revendications précédentes,
**caractérisée en ce que**
le deuxième segment d'assemblage (90) est conçu sous la forme d'un deuxième tasseau d'assemblage (95), qui s'étend le long de la paroi latérale (30), dans la direction de l'espace d'angle (120) et/ou dans la direction arrière.

5. Carrosserie de véhicule selon l'une quelconque des revendications précédentes 3 et 4,
**caractérisée en ce que**
le premier (85) et le deuxième tasseau d'assemblage (95) sont assemblés l'un avec l'autre.

6. Carrosserie de véhicule selon l'une quelconque des revendications précédentes,
**caractérisée en ce que**
l'élément d'assemblage (70) est conçu sous la forme d'une cornière.

7. Carrosserie de véhicule selon l'une quelconque des revendications précédentes et/ou selon la revendication 3 et 4,
**caractérisée en ce que**
la matière isolante (110) est placée dans un espace d'angle (120), défini par le segment de pontage (100), la paroi antérieure (20) et la paroi latérale (30) et/ou dans un espace de profilé (130), défini par le segment de pontage (100), le premier tasseau d'assemblage (85) et le deuxième tasseau d'assemblage (95).

8. Carrosserie de véhicule selon l'une quelconque des revendications précédentes,
**caractérisée en ce que**
le segment de pontage (100) est conçu sous la forme d'une surface concave ou convexe ou sous la forme d'une surface plane.

9. Carrosserie de véhicule selon l'une quelconque des revendications précédentes,
**caractérisée en ce que**
plusieurs éléments d'assemblage (70) sont placés avec un écart mutuel dans la hauteur.

10. Carrosserie de véhicule selon l'une quelconque des revendications précédentes,
**caractérisée en ce que**
le ou les plusieurs élément (s) d'assemblage (70) sont conçus sous la forme d'élément(s) isolant(s), de maintien et/ou de renfort.

11. Véhicule, pourvu d'une carrosserie de véhicule (10) selon l'une quelconque des revendications précédentes.

12. Procédé, destiné à fabriquer une carrosserie de véhicule (10) pourvue d'une paroi antérieure (20) placée dans la direction de déplacement vers l'avant, d'au moins une paroi latérale (30) s'étendant à partir de la paroi antérieure (20) dans la direction arrière et d'au moins un espaceur (50) s'étendant à partir de la paroi antérieure (20) dans la direction arrière, notamment dans la direction d'un espace de chargement (40), en utilisant un élément d'assemblage (70), qui comporte un premier segment d'assemblage (80), un deuxième segment d'assemblage (90) et un segment de pontage (100) assemblant le premier segment d'assemblage (80) et le deuxième segment d'assemblage (90), lors duquel, dans la direction de l'espace de chargement (40), dans la zone d'un angle, l'on assemble la paroi antérieure (20) avec la paroi latérale (30), la paroi antérieure (20) et la paroi latérale (30) étant adjacentes et l'on assemble le premier segment d'assemblage (80) avec la paroi antérieure (20) constituant la carrosserie de véhicule (10) et l'on assemble le deuxième segment d'assemblage (90) avec la paroi latérale (30) constituant la carrosserie de véhicule (10).
